# EUROPEAN PATENT SPECIFICATION

(11) **EP 3 059 155 B1**
(45) Date of publication and mention of the grant of the patent: **04.10.2017**
(21) Application number: 16156511.4
(22) Date of filing: 19.02.2016
(51) Int. Cl.: B62M 6/65

(54) **HUB UNIT FOR ELECTRIC POWER-ASSISTED HUMAN POWERED VEHICLE**
NABENEINHEIT FÜR ELEKTRISCH UNTERSTÜTZTES, VOM MENSCHEN ANGETRIEBENES FAHRZEUG
MOTEUR DE MOYEU POUR VÉHICULE À PROPULSION HUMAINE ASSISTÉE ÉLECTRIQUE

(30) Priority: 20.02.2015 JP 2015032087
(43) Date of publication of application: 24.08.2016
(73) Proprietor: Musashi Seimitsu Industry Co., Ltd., Aichi (JP)
(72) Inventor: NONOYAMA, Kazunori, Aichi (JP); HAMADA, Tetsuro, Aichi (JP); MUTO, Nobuto, Aichi (JP)
(74) Representative: Weickmann & Weickmann PartmbB

(56) References cited:
- EP-A1- 2 412 623
- EP-A1- 2 586 694
- CH-A2- 705 521
- DE-A1- 10 127 769
- DE-U1- 20 018 466
- JP-A- 2012 122 501

## Description

### [TECHNICAL FIELD]

The present invention relates to a hub unit for an electric power-assisted human powered vehicle.

### [BACKGROUND ART]

A hub unit for an electric power-assisted human powered vehicle as disclosed in Patent Document 1 is already known, the hub unit including, inside a hub case which rotates around an axle of the vehicle: a speed-change mechanism part transmitting a rotation output of a tread force from a pedal to the hub case so as to be capable of changing a speed of the rotation output; a driving electric motor; and a speed-reduction mechanism part decelerating a rotation output of the driving electric motor and transmitting the rotation output to the hub case, wherein the speed-change mechanism part, the speed-reduction mechanism part and the driving electric motor are aligned in an axial direction of the axle.

### [PRIOR ART DOCUMENT]

### [PATENT DOCUMENT]

[Patent Document 1] Japanese Patent Application Laid-open No. 2013-139242 is considered the closest prior art document and discloses all of the features of the preamble of claim 1.

### [SUMMARY OF THE INVENTION]

### [PROBLEM TO BE SOLVED BY THE INVENTION]

In the hub unit disclosed in Patent Document 1 described above, it is possible to use a high-rotation and small-sized electric motor by increasing a speed-reduction ratio. However, increasing the speed-reduction ratio needs a large difference in diameter between a small-diameter gear and a large-diameter gear of a two-stage pinion gear forming a reduction gear. Hence, downsizing an electric motor requires a reduction gear having a large diameter, and this makes it difficult to downsize the electric hub unit as a whole. In addition, a dead space is formed between the small-diameter gear and the axle by the difference in diameter between the small-diameter gear and the large-diameter gear.

The present invention has been made in view of such circumstances. An object of the present invention is to enable adoption of a high-rotation and small-sized electric motor by adopting a high speed-reduction mechanism and further to efficiently reduce the diameter of a hub unit for an electric power-assisted human powered vehicle as a whole, the hub unit incorporating a speed-reduction mechanism and a speed-change mechanism which are housed inwardly in a radial direction of the small-sized electric motor.

### [MEANS TO SOLVE THE PROBLEMS]

In order to achieve the object, a hub unit for an electric power-assisted human powered vehicle according to the present invention comprises, inside a hub case which rotates around an axle of the vehicle: a speed-change mechanism portion transmitting a rotation output of a tread force from a pedal to the hub case so as to be capable of changing a speed of the rotation output; a driving electric motor; and a speed-reduction mechanism portion decelerating a rotation output of the driving electric motor and transmitting the rotation output to the hub case, wherein the speed-change mechanism portion, the speed-reduction mechanism portion and the driving electric motor are aligned in an axial direction of the axle, wherein the speed-change mechanism portion includes: a speed-change sun gear to be connected to the axle, a speed-change output ring gear to be connected to the hub case, a speed-change carrier rotatably supported on the axle and receiving the tread force from the pedal; and a speed-change pinion rotatably supported on the speed-change carrier and meshing with the speed-change sun gear and the speed-change output ring gear, the speed-reduction mechanism portion includes: a speed-reduction sun gear rotatably supported on the axle and receiving a rotation output of the driving electric motor; a stationary speed-reduction ring gear protruding inwardly in a radial direction from a motor case unrotatably fixed to the axle; a speed-reduction output ring gear protruding from the hub case inwardly in the radial direction of the stationary speed-reduction ring gear; a speed-reduction carrier rotatably supported on the axle; and a speed-reduction pinion rotatably supported on the speed-reduction carrier and coaxially including a first gear meshing with the speed-reduction sun gear and the stationary speed-reduction ring gear and a second gear meshing with the speed-reduction output ring gear, and on a projection plane to a section perpendicular to the axle, pitch circles of the stationary speed-reduction ring gear, the speed-reduction output ring gear and the speed-change output ring gear are arranged inwardly in the radial direction of an outer periphery of a stator of the driving electric motor. (This is a first characteristic of the present invention.)

In the hub unit for an electric power-assisted human powered vehicle according to the present invention, preferably, the speed-change sun gear has a shaft portion rotatably supported on the axle via a first bearing, and the speed-reduction carrier is rotatably supported on the shaft portion via a second bearing provided around an outer periphery of the first bearing. (This is a second characteristic of the present invention.)

Further, in the hub unit for an electric power-assisted human powered vehicle according to the present invention, preferably, connection and disconnection between the speed-change sun gear and the axle are switchable by a switching clutch, a first one-way clutch is provided between the speed-change output ring gear and the hub case, a second one-way clutch is provided between the speed-change carrier and the hub case, and both of the first and the second one-way clutches are provided between the motor case and the hub case on the projection plane to the section perpendicular to the axle. (This is a third characteristic of the present invention.)

### [EFFECTS OF THE INVENTION]

According to the first characteristic of the present invention, the speed-reduction mechanism portion includes: the speed-reduction sun gear rotatably supported on the axle and receiving a rotation output of the driving electric motor; the stationary speed-reduction ring gear protruding inwardly in the radial direction from the motor case unrotatably fixed to the axle; the speed-reduction output ring gear protruding from the hub case inwardly in the radial direction of the stationary speed-reduction ring gear; the speed-reduction carrier rotatably supported on the axle; and the speed-reduction pinion rotatably supported on the speed-reduction carrier and coaxially including the first gear meshing with the speed-reduction sun gear and the stationary speed-reduction ring gear and the second gear meshing with the speed-reduction output ring gear. With this configuration, the rotation of the driving electric motor transmitted from the speed-reduction sun gear can be transmitted at a high speed-reduction ratio from the speed-reduction output ring gear to the hub case without increasing the diameter of a reduction gear. Thus, it is possible to simultaneously realize use of a high-rotation and small-sized electric motor and reduction in the diameter of the reduction gear.

Hence, on the projection plane to the section perpendicular to the axle, the pitch circles of the stationary speed-reduction ring gear, the speed-reduction output ring gear and the speed-change output ring gear can be arranged inwardly in the radial direction of the outer periphery of the stator of the driving electric motor, thereby it is to enable reductions in the size and the diameter of the hub unit for an electric power-assisted human powered vehicle as a whole.

Further, according to the second characteristic of the present invention, the speed-change sun gear has the shaft portion rotatably supported on the axle via the first bearing, and the speed-reduction carrier is rotatably supported on the shaft portion via the second bearing provided around the outer periphery of the first bearing. Accordingly, disposing the bearing of the speed-reduction carrier in an overlapping manner on the bearing of the speed-change sun gear makes it possible to avoid increase in the size of the hub unit for an electric power-assisted human powered vehicle in the axial direction even in a case where a space disposing the bearings on the axle cannot be secured sufficiently.

Further, according to the third characteristic of the present invention, connection and disconnection between the speed-change sun gear and the axle are switchable by the switching clutch, the first one-way clutch is provided between the speed-change output ring gear and the hub case and the second one-way clutch is provided between the speed-change carrier and the hub case. Accordingly, when the speed-change sun gear is connected to the axle, the rotation of the speed-change carrier to which the tread force from the pedal is transmitted can be accelerated and transmitted from the speed-change output ring gear to the hub case. Meanwhile, when the speed-change sun gear is disconnected from the axle, the rotation of the speed-change carrier can be directly transmitted to the hub case.

Furthermore, on the projection plane to the section perpendicular to the axle, both of the first and the second one-way clutches are provided between the motor case and the hub case. Accordingly, when the first and the second one-way clutches are disposed as close as possible to an outer diameter side of the hub case so as to increase the length in a peripheral direction of the hub case, it is possible to thin the sizes in the axial direction of the one-way clutches while keeping allowable torque and to further reduce the diameter of the hub unit for an electric power-assisted human powered vehicle as a whole.

### [BRIEF DESCRIPTION OF THE DRAWINGS]

[FIG. 1] FIG. 1 is a schematic diagram of a hub unit H for an electric power-assisted human powered vehicle in a first embodiment of the present invention.
[FIG. 2] FIG. 2 is a velocity diagram of the hub unit H for an electric power-assisted human powered vehicle in the first embodiment of the present invention.
[FIG. 3] FIG. 3 is a schematic diagram of a hub unit H for an electric power-assisted human powered vehicle in a second embodiment of the present invention.

### [MODES FOR CARRYING OUT THE INVENTION]

Embodiments of the present invention will be described based on the attached drawings.

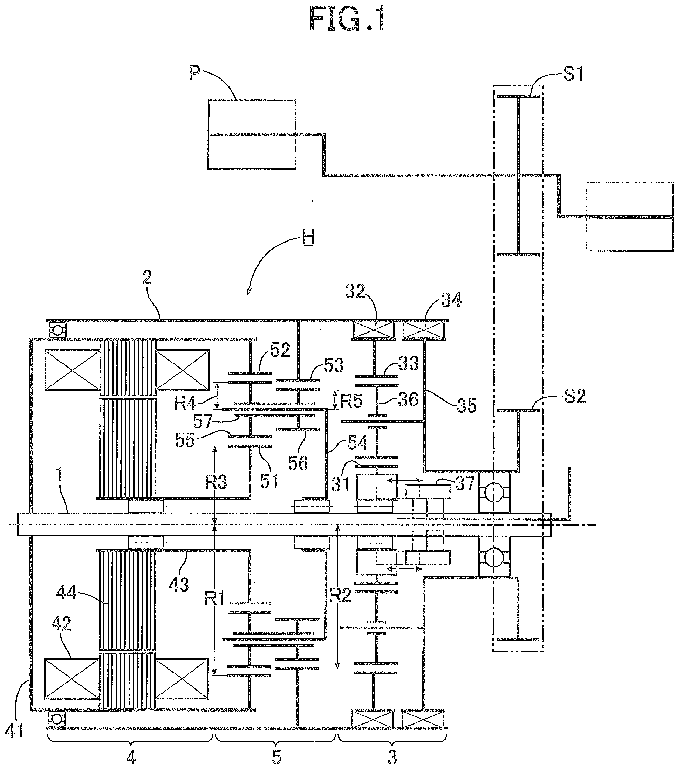

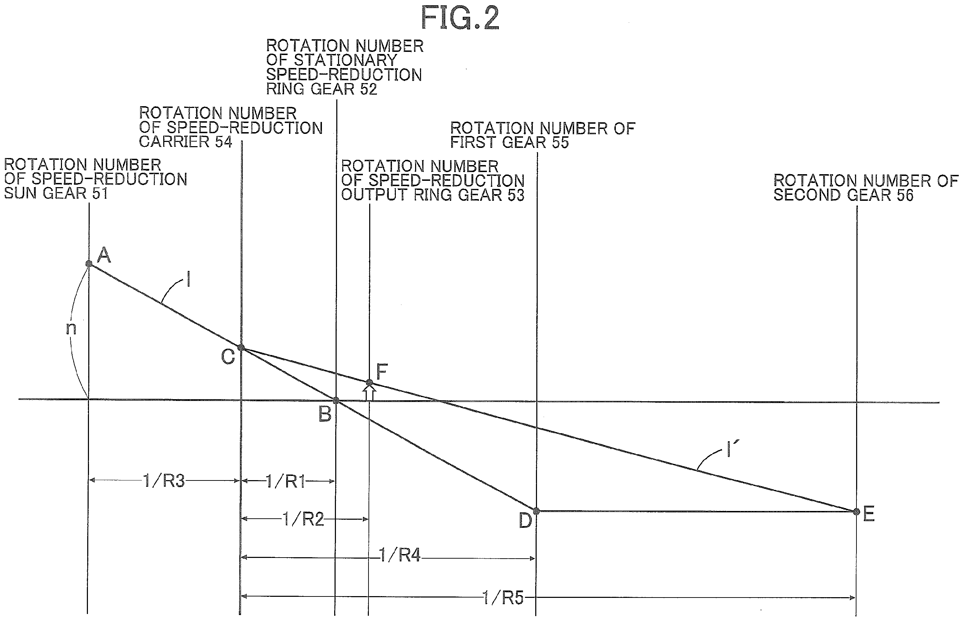

First of all, a first embodiment of a hub unit for an electric power-assisted human powered vehicle of the present invention will be described based on FIGS. 1 and 2.

In FIG. 1 which is a skeleton diagram of the hub unit H for an electric power-assisted human powered vehicle according to the first embodiment of the present invention, the hub unit H for an electric power-assisted human powered vehicle is attached to an axle 1 of a rear wheel of an electric bicycle, for example. A tread force on a pedal P by an occupant is inputted to the hub unit H via a driving sprocket S1 and a following sprocket S2, and a driving force in accordance with the tread force is outputted from the hub unit H to the rear wheel.

The hub unit H includes, for example,: the axle 1 serving as a stationary shaft fixed to left and right rear forks of the unillustrated electric bicycle; a hub case 2 serving as a rotary body whose outer peripheral portion is connected to a spoke of the unillustrated rear wheel; a speed-change mechanism portion 3 housed in the hub case 2 and configured to transmit a rotation output of a tread force inputted from the pedal P to the hub case 2 so as to be capable of changing the speed of the rotation output; a driving electric motor 4 housed in the hub case 2; and a speed-reduction mechanism portion 5 housed in the hub case 2 and configured to decelerate a rotation output of the driving electric motor 4 and transmit the rotation output to the hub case 2. The speed-change mechanism portion 3, the driving electric motor 4 and the speed-reduction mechanism portion 5 are disposed side by side in an axial direction of the axle 1 in the order of the speed-change mechanism portion 3, the speed-reduction mechanism portion 5 and the driving electric motor 4 from the following sprocket S2 side.

The speed-change mechanism portion 3 includes, for example,: a speed-change sun gear 31 connected to the axle 1 such that connection and disconnection between the speed-change sun gear 31 and the axle 1 are switchable; a speed-change output ring gear 33 configured to be connected to the hub case 2 via a first one-way clutch 32; a speed-change carrier 35 rotatably supported on the axle 1, configured to be connected to the hub case 2 via a second one-way clutch 34 and receiving the tread force from the pedal P via the following sprocket S2; and a speed-change pinion 36 rotatably supported on the speed-change carrier 35 and meshing with the speed-change sun gear 31 and the speed-change output ring gear 33. Connection and disconnection between the speed-change sun gear 31 and the axle 1 are switched by a switching clutch 37 which operates when receiving an external signal.

Moreover, the first one-way clutch 32 transmits rotation of the speed-change output ring gear 33 to the hub case 2 when a rotation number of the speed-change output ring gear 33 is larger than a rotation number of the hub case 2, and the second one-way clutch 34 transmits rotation of the speed-change carrier 35 to the hub case 2 when a rotation number of the speed-change carrier 35 is larger than the rotation number of the hub case 2.

Accordingly, when the speed-change sun gear 31 is connected to the axle 1 by the switching clutch 37, rotation of the speed-change carrier 35 is accelerated by the speed-change pinion 36 and transmitted to the speed-change output ring gear 33, the speed-change pinion 36 revolving around the axle 1 and rotating in mesh with the speed-change sun gear 31. Hence, the accelerated rotation of the speed-change output ring gear 33 is transmitted to the hub case 2. In addition, when the speed-change sun gear 31 and the axle 1 are disconnected from each other by the switching clutch 37, the speed-change output ring gear 33 rotates freely in accordance with the rotation of the speed-change carrier 35. Hence, the rotation of the speed-change carrier 35 is directly transmitted to the hub case 2. Thus, two-stage gear shift is possible.

Further, on a projection plane to a section perpendicular to the axle 1, both of the first and the second one-way clutches 32, 34 are provided between a motor case 41 and the hub case 2, and the first and the second one-way clutches 32, 34 are arranged as close as possible to an outer diameter side of the hub case 2 so as to be able to increase the length in a peripheral direction of the hub case 2. Therefore, while keeping allowable torque, it is possible to thin the first and the second one-way clutches 32, 34 and to reduce the diameter of the hub unit H for an electric power-assisted human powered vehicle as a whole.

Furthermore, note that it is also possible to have a simple configuration in which: the second one-way clutch 34 and the switching clutch 37 are omitted, the speed-change sun gear 31 is connected to the axle 1, and the rotation of the speed-change carrier 35 is accelerated and transmitted from the speed-change output ring gear 33 to the hub case 2.

The driving electric motor 4 includes, for example,: the motor case 41 unrotatably fixed to the axle 1 and rotatably disposed in the hub case 2; a stator 42 fixed in the motor case 41; a motor shaft 43 rotatably supported on an outer periphery of the axle 1; and a rotor 44 fixed to an outer periphery of the motor shaft 43 and disposed inwardly of the stator 42.

The speed-reduction mechanism portion 5 includes, for example,: a speed-reduction sun gear 51 rotatably supported on the axle 1 and connected to the motor shaft 43; a stationary speed-reduction ring gear 52 protruding inwardly in a radial direction from the motor case 41; a speed-reduction output ring gear 53 protruding from the hub case 2 inwardly in the radial direction of the stationary speed-reduction ring gear 52; a speed-reduction carrier 54 rotatably supported on the axle 1; and a speed-reduction pinion 57 rotatably supported on the speed-reduction carrier 54 and coaxially including a first gear 55 and a second gear 56, the first gear 55 meshing with the speed-reduction sun gear 51 and the stationary speed-reduction ring gear 52, and the second gear 56 meshing with the speed-reduction output ring gear 53. When rotation of the speed-reduction sun gear 51 is transmitted to the first gear 55 of the speed-reduction pinion 57, the speed-reduction pinion 57 rotatably supported on the speed-reduction carrier 54 rotates while revolving around the axle 1 because the stationary speed-reduction ring gear 52 is fixed to the motor case 41. The revolution and the rotation of the speed-reduction pinion 57 are transmitted from the second gear 56 to the speed-reduction output ring gear 53, thereby making it possible to transmit rotation of the driving electric motor 4 from the speed-reduction output ring gear 53 to the hub case 2 at a high speed-reduction ratio as described later.

Moreover, since it is possible to transmit the rotation of the driving electric motor 4 at the high speed-reduction ratio, pitch circles of the stationary speed-reduction ring gear 52, the speed-reduction output ring gear 53 and the speed-change output ring gear 33 can be arranged inwardly in the radial direction of an outer periphery of the stator 42 of the driving electric motor 4 on the projection plane to the section perpendicular to the axle 1, respectively. Thus, it is possible to simultaneously realize use of the driving electric motor 4 which is configured to rotate at high speed and small-sized and reduction in the diameter of a reduction gear formed from the speed-change mechanism portion 3 and the speed-reduction mechanism portion 5.

Next, the reason that the speed-reduction mechanism portion 5 is capable of transmitting the rotation of the driving electric motor 4 to the hub case 2 at the high speed-reduction ratio will be described based on a velocity diagram of FIG. 2.

In the velocity diagram (collinear chart) of FIG. 2, R1, R2, R3, R4 and R5 respectively represent a radius of the pitch circle of the stationary speed-reduction ring gear 52, a radius of the pitch circle of the speed-reduction output ring gear 53, a radius of a pitch circle of the speed-reduction sun gear 51, a radius of a pitch circle of the first gear 55 and a radius of a pitch circle of the second gear 56, on FIG. 1. Using the speed-reduction carrier 54 as a reference, points of lengths corresponding to inverse numbers 1/R1 to 1/R5 of the radii of these pitch circles are indicated along a horizontal axis such that the point corresponding to the speed-reduction sun gear 51 is located leftward of the speed-reduction carrier 54 and the other points are located rightward of the speed-reduction carrier 54. In addition, rotation numbers of the gears 51 to 53, 55, 56 and the speed-reduction carrier 54 which correspond to these points are indicated on vertical axes, respectively.

Here, since the speed-reduction output ring gear 53 protrudes inwardly in the radial direction of the stationary speed-reduction ring gear 52 and the first and the second gears 55, 56 are coaxially provided to the speed-reduction pinion 57, R2<R1 and R5<R4 are satisfied. Thus, on the horizontal axis of the velocity diagram in FIG. 2, the lengths 1/R1, 1/R2, 1/R4 and 1/R5 from the point representing the speed-reduction carrier 54 to the points respectively representing the stationary speed-reduction ring gear 52, the speed-reduction output ring gear 53, the first gear 55 and the second gear 56 satisfy 1/R1<1/R2<1/R4<1/R5. Moreover, when drawing vertical axes orthogonal to the horizontal axis, respectively, from the points corresponding to the respective gears on the horizontal axis, a length from an arbitrary point on each of the vertical axes to the horizontal axis represents the rotation number of the corresponding gear at the point.

Now, when the rotation number of the speed-reduction sun gear 51 is set to n, the rotation number of the stationary speed-reduction ring gear 52 is 0 because the stationary speed-reduction ring gear 52 is integrated with the axle 1. Thus, when a point A representing the rotation number of n on the vertical axis of the speed-reduction sun gear 51 and a point B representing the rotation number of 0 on the vertical axis of the stationary speed-reduction ring gear 52 are connected to each other with a straight line (collinear line) 1, points C, D at which the straight line 1 intersects with the vertical axis of the speed-reduction carrier 54 and the vertical axis of the first gear 55, respectively, are points respectively representing the rotation numbers of the speed-reduction carrier 54 and the first gear 55, respectively.

Here, since the first gear 55 and the second gear 56 are both formed on the speed-reduction pinion 57 and rotate at the same rotation number, a point E at which a line segment extended from the point D in parallel to the horizontal axis intersects with the vertical axis of the second gear 56 is a point representing the rotation number of the second gear 56. Thus, when the point E and the point C representing the rotation number of the speed-reduction carrier 54 are connected to each other with a straight line (collinear line) 1', a point F at which the straight line 1' intersects with the vertical axis of the speed-reduction output ring gear 53 is a point representing the rotation number of the speed-reduction output ring gear 53. Accordingly, a length indicated by a white arrow on the vertical axis of the speed-reduction output ring gear 53 represents the rotation number of the speed-reduction output ring gear 53. Further, this length is much shorter than the length representing the rotation number n of the speed-reduction sun gear 51 on the vertical axis of the speed-reduction sun gear 51. Therefore, according to the speed-reduction mechanism portion of the present invention, it is possible to transmit the rotation of the speed-reduction sun gear 51 to the speed-reduction output ring gear 53 at the high speed-reduction ratio without increasing the diameter of the reduction gear.

Next, an operation of this embodiment will be described.

When a tread force on the pedal P by the occupant is transmitted to the speed-change carrier 35 via the following sprocket S2, the rotation of the speed-change carrier 35 is transmitted from the speed-change mechanism portion 3 to the rear wheel via the hub case 2. When the speed-change sun gear 31 and the axle 1 are disconnected from each other by the switching clutch 37, the rotation of the speed-change carrier 35 is directly transmitted to the hub case 2 and the hub case 2 rotates at the same rotation number as the speed-change carrier 35. Meanwhile, when the speed-change sun gear 31 is connected to the axle 1 by the switching clutch 37, the rotation of the speed-change output ring gear 33 is accelerated and transmitted to the hub case 2. Thus, the two-stage gear shift using the pedal P is possible by operating the switching clutch 37.

Moreover, in this state, when the driving electric motor 4 is driven, the rotation of the motor shaft 43 is transmitted to the speed-reduction sun gear 51. Since the stationary speed-reduction ring gear 52 is fixed to the motor case 41, the rotation of the speed-reduction sun gear 51 is transmitted from the first gear 55 to the speed-reduction pinion 57, and the speed-reduction pinion 57 rotates on the speed-reduction carrier 54 and revolves around the axle 1. Further, the rotation and the revolution of the speed-reduction pinion 57 are transmitted from the second gear 56 to the speed-reduction output ring gear 53, therefore the hub case 2 is rotated and thereby the rotation of the hub case 2 by the tread force on the pedal P is assisted.

The first one-way clutch 32 is interposed between the hub case 2 and the speed-change output ring gear 33, and the second one-way clutch 34 is interposed between the hub case 2 and the speed-change carrier 35. Hence, even in a case, for example, where the pedal P is rotated slowly and the hub case 2 is rotated quickly on a downhill, the rotation of the hub case 2 is not transmitted to the following sprocket S2.

Further, as described above, the speed-reduction mechanism portion 5 includes: the stationary speed-reduction ring gear 52 protruding inwardly in the radial direction from the motor case 41 unrotatably fixed to the axle 1; the speed-reduction output ring gear 53 protruding from the hub case 2 inwardly in the radial direction of the stationary speed-reduction ring gear 52; and the speed-reduction pinion 57 rotatably supported on the speed-reduction carrier 54 and coaxially including the first gear 55 and the second gear 56, the first gear 55 meshing with the speed-reduction sun gear 51 and the stationary speed-reduction ring gear 52, and the second gear 56 meshing with the speed-reduction output ring gear 53. Therefore, it is possible to transmit the rotation of the driving electric motor 4 from the speed-reduction output ring gear 53 to the hub case 2 at the high speed-reduction ratio. Furthermore, it is possible to transmit the rotation of the driving electric motor 4 at the high speed-reduction ratio without increasing the diameter of the reduction gear. Accordingly, the pitch circles of the speed-reduction output ring gear 53, the stationary speed-reduction ring gear 52 and the speed-change output ring gear 33 can be arranged inwardly in the radial direction of the outer periphery of the stator 42 of the driving electric motor 4 on the projection plane to the section perpendicular to the axle 1. Thus, it is possible to simultaneously realize the use of the driving electric motor 4 which is configured to rotate at high speed and small-sized and reduction in the diameter of the reduction gear formed from the speed-change mechanism portion 3 and the speed-reduction mechanism portion 5.

Additionally, on the projection plane to the section perpendicular to the axle 1, both of the first and the second one-way clutches 32, 34 are provided between the motor case 41 and the hub case 2, and the first and the second one-way clutches 32, 34 are arranged as close as possible to the outer diameter side of the hub case 2 so as to be able to increase the length in the peripheral direction of the hub case 2. While keeping the allowable torque, it is possible to thin the first and the second one-way clutches 32, 34 and to further reduce the diameter of the hub unit H for an electric power-assisted human powered vehicle as a whole.

It should be noted that although no one-way clutch is disposed between the hub case 2 and the speed-reduction output ring gear 53, this is to generate a regenerated current by transmitting the rotation of the hub case 2 to the driving electric motor 4. In a case where it is not necessary to generate the regenerated current, it is desirable to dispose a one-way clutch between the hub case 2 and the speed-reduction output ring gear 53 in order to prevent dragging of the driving electric motor 4.

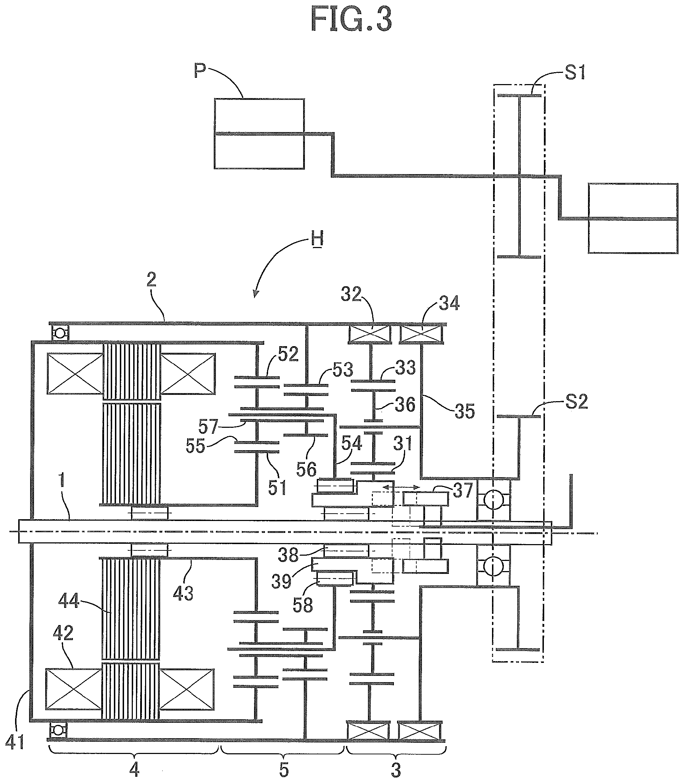

Next, a second embodiment of the present invention will be described based on FIG. 3.

The second embodiment shown in a schematic diagram of FIG. 3 is different from the hub unit H for an electric power-assisted human powered vehicle of the first embodiment only in that the speed-change sun gear 31 of the first embodiment has a shaft portion 39 rotatably supported on the axle 1 via a first bearing 38, the shaft portion 39 rotatably supporting the speed-reduction carrier 54 via a second bearing 58 provided around an outer periphery of the first bearing 38. Other than this, the second embodiment is not different from the hub unit H for an electric power-assisted human powered vehicle of the first embodiment. Accordingly, in FIG. 3, the parts not different from those in the first embodiment are denoted by the same numerals as in the first embodiment, and the descriptions of these parts will be omitted.

According to this embodiment, the speed-change sun gear 31 has the shaft portion 39 rotatably supported on the axle 1 via the first bearing 38, and the speed-reduction carrier 54 is rotatably supported on the shaft portion 39 via the second bearing 58 provided around the outer periphery of the first bearing 38. Accordingly, disposing the second bearing 58 of the speed-reduction carrier 54 in an overlapping manner on the first bearing 38 of the speed-change sun gear 31 makes it possible to avoid increase in the size of the hub unit H for an electric power-assisted human powered vehicle in the axial direction.

Hereinabove, the description has been given of the first and the second embodiments of the present invention. However, various modifications in design can be made within the scope of the claims.

For example, in the embodiments of the present invention, the hub unit H is disposed to the rear wheel, but this may also be disposed to a front wheel.

Moreover, in the embodiments of the present invention, the description has been given of the case where the vehicle equipped with the hub unit H for an electric power-assisted human powered vehicle is an electric bicycle. However, the hub unit H for an electric power-assisted human powered vehicle of the present invention is applicable also to an electric two-wheeled vehicle and the like. In such a case, when the rotation number of the hub case 2 caused by the tread force on the pedal P is smaller than the rotation number of the hub case 2 attributable to the driving electric motor 4, or when the pedal P is not pressed, the hub case 2 rotates only by a driving force of the driving electric motor 4. Nevertheless, since the first one-way clutch 32 is interposed between the hub case 2 and the speed-change output ring gear 33 and the second one-way clutch 34 is interposed between the hub case 2 and the speed-change carrier 35, the rotation of the hub case 2 is not transmitted to the following sprocket S2.
To enable adoption of high-rotation and small-sized electric motor and to efficiently reduce diameter of entire hub unit for electric power-assisted human powered vehicle.

[MEANS FOR SOLUTION] Speed-reduction mechanism portion 5 includes: speed-reduction sun gear 51 connected to rotor 44 of driving electric motor; stationary speed-reduction ring gear 52 protruding from motor case 41; speed-reduction output ring gear 53 protruding from hub case 2 inwardly in radial direction of stationary speed-reduction ring gear 52; speed-reduction carrier 54; and speed-reduction pinion 57 coaxially including first gear 55 meshing with speed-reduction sun gear 51 and stationary speed-reduction ring gear 52 and second gear 56 meshing with speed-reduction output ring gear 53. Pitch circles of speed-reduction output ring gear 53, stationary speed-reduction ring gear 52 and speed-change output ring gear 33 of speed-change mechanism portion are arranged inwardly in radial direction of outer periphery of stator 42.

### [DESCRIPTION OF REFERENCE NUMERALS AND SYMBOLS]

- 1: axle
- 2: hub case
- 3: speed-change mechanism portion
- 31: speed-change sun gear
- 32: first one-way clutch
- 33: speed-change output ring gear
- 34: second one-way clutch
- 35: speed-change carrier
- 36: speed-change pinion
- 37: switching clutch
- 38: first bearing
- 39: shaft portion
- 4: driving electric motor
- 41: motor case
- 42: stator
- 5: speed-reduction mechanism portion
- 51: speed-reduction sun gear
- 52: stationary speed-reduction ring gear
- 53: speed-reduction output ring gear
- 54: speed-reduction carrier
- 55: first gear
- 56: second gear
- 57: speed-reduction pinion
- 58: second bearing
- P: pedal

## Claims

1. A hub unit for an electric power-assisted human powered vehicle comprising, inside a hub case (2) which rotates around an axle (1) of the vehicle:
a speed-change mechanism portion (3) transmitting a rotation output of a tread force from a pedal (P) to the hub case (2) so as to be capable of changing a speed of the rotation output;
a driving electric motor (4); and
a speed-reduction mechanism portion (5) decelerating a rotation output of the driving electric motor (4) and transmitting the rotation output to the hub case (2), wherein the speed-change mechanism portion (3), the speed-reduction mechanism portion (5) and the driving electric motor (4) are aligned in an axial direction of the axle (1),
wherein the speed-change mechanism portion (3) is **characterized by**:
a speed-change sun gear (31) to be connected to the axle (1),
a speed-change output ring gear (33) to be connected to the hub case (2),
a speed-change carrier (35) rotatably supported on the axle (1) and receiving the tread force from the pedal (P); and
a speed-change pinion (36) rotatably supported on the speed-change carrier (35) and meshing with the speed-change sun gear (31) and the speed-change output ring gear (33),
the speed-reduction mechanism portion (5) includes:
a speed-reduction sun gear (51) rotatably supported on the axle (1) and receiving a rotation output of the driving electric motor (4);
a stationary speed-reduction ring gear (52) protruding inwardly in a radial direction from a motor case (41) unrotatably fixed to the axle (1);
a speed-reduction output ring gear (53) protruding from the hub case (2) inwardly in the radial direction of the stationary speed-reduction ring gear (52);
a speed-reduction carrier (54) rotatably supported on the axle (1); and
a speed-reduction pinion (57) rotatably supported on the speed-reduction carrier (54) and coaxially including
a first gear (55) meshing with the speed-reduction sun gear (51) and the stationary speed-reduction ring gear (52), and
a second gear (56) meshing with the speed-reduction output ring gear (53), and
on a projection plane to a section perpendicular to the axle (1), pitch circles of the stationary speed-reduction ring gear (52), the speed-reduction output ring gear (53) and the speed-change output ring gear (33) are arranged inwardly in the radial direction of an outer periphery of a stator (42) of the driving electric motor (4).

2. The hub unit for an electric power-assisted human powered vehicle according to claim 1, wherein
the speed-change sun gear (31) has a shaft portion (39) rotatably supported on the axle (1) via a first bearing (38), and
the speed-reduction carrier (54) is rotatably supported on the shaft portion (39) via a second bearing (58) provided around an outer periphery of the first bearing (38).

3. The hub unit for an electric power-assisted human powered vehicle according to claim 1 or 2, wherein
connection and disconnection between the speed-change sun gear (31) and the axle (1) are switchable by a switching clutch (37),
a first one-way clutch (32) is provided between the speed-change output ring gear (33) and the hub case (2),
a second one-way clutch (34) is provided between the speed-change carrier (35) and the hub case (2), and
both of the first and the second one-way clutches (32, 34) are provided between the motor case (41) and the hub case (2) on the projection plane to the section perpendicular to the axle (1).

## Patentansprüche

1. Nabeneinheit für einen elektrischen Hilfsantrieb eines von einem Menschen angetriebenen Fahrzeugs, welches innerhalb eines Nabengehäuses (2), welches sich um eine Achse (1) des Fahrzeugs dreht, umfasst:
einen Geschwindigkeitsänderung-Mechanismusbereich (3), welcher eine Drehausgabe einer Trittkraft von einem Pedal (P) zu dem Nabengehäuse (2) überträgt, um in der Lage zu sein, eine Geschwindigkeit der Drehausgabe zu ändern;
einen antreibenden Elektromotor (4); und
einen Geschwindigkeitsverringerung-Mechanismusbereich (5), welcher eine Drehausgabe des antreibenden Elektromotors (4) verlangsamt und die Drehausgabe zu dem Nabengehäuse (2) überträgt, wobei der Geschwindigkeitsänderung-Mechanismusbereich (3), der Geschwindigkeitsverringerung-Mechanismusbereich (5) und der antreibende Elektromotor (4) in einer axialen Richtung der Achse (1) ausgerichtet sind,
wobei der Geschwindigkeitsänderung-Mechanismusbereich (3) **gekennzeichnet ist durch**:
ein Geschwindigkeitsänderung-Sonnenrad (31) zum Verbinden mit der Achse (1),
ein Geschwindigkeitsänderung-Ausgaberingzahnrad (33) zum Verbinden mit dem Nabengehäuse (2),
einen Geschwindigkeitsänderung-Träger (35), welcher an der Achse (1) drehbar gehaltert ist und die Trittkraft von dem Pedal (P) empfängt; und
ein Geschwindigkeitsänderung-Ritzel (36), welches an dem Geschwindigkeitsänderung-Träger (35) drehbar gehaltert ist und mit dem Geschwindigkeitsänderung-Sonnenrad (31) und dem Geschwindigkeitsänderung-Ausgaberingzahnrad (33) kämmt,
wobei der Geschwindigkeitsverringerung-Mechanismusbereich (5) umfasst:
ein Geschwindigkeitsverringerung-Sonnenrad (51), welches an der Achse (1) drehbar gehaltert ist und eine Drehausgabe des antreibenden Elektromotors (4) empfängt;
ein stationäres Geschwindigkeitsverringerung-Ringzahnrad (52), welches nach innen in eine radiale Richtung von einem Motorgehäuse (41) hervorsteht, welches an der Achse (1) nicht-drehbar fixiert ist;
ein Geschwindigkeitsverringerung-Ausgaberingzahnrad (53), welches von dem Nabengehäuse (2) nach innen in die radiale Richtung des stationären Geschwindigkeitsverringerung-Ringzahnrads (52) hervorsteht;
ein Geschwindigkeitsverringerung-Träger (57), welcher an der Achse (1) drehbar gehaltert ist; und
ein Geschwindigkeitsverringerung-Ritzel (54), welches an dem Geschwindigkeitsverringerung-Träger (54) drehbar gehaltert ist und koaxial umfasst
ein erstes Zahnrad (55), welches mit dem Geschwindigkeitsverringerung-Sonnenrad (51) und dem stationären Geschwindigkeitsverringerung-Ringzahnrad (52) kämmt, und
ein zweites Zahnrad (56), welches mit dem Geschwindigkeitsverringerung-Ausgaberingzahnrad (53) kämmt, und
wobei an einer Projektionsebene zu einem senkrecht zu der Achse (1) gelegenen Abschnitt Wälzkreise des stationären Geschwindigkeitsverringerung-Ringzahnrads (52), des Geschwindigkeitsverringerung-Ausgaberingzahnrad (53) und des Geschwindigkeitsänderung-Ausgaberingzahnrad (33) nach innen in die radiale Richtung einer äußeren Peripherie eines Stators (42) des antreibenden Elektromotors (4) angeordnet sind.

2. Nabeneinheit für einen elektrischen Hilfsantrieb eines von einem Menschen angetriebenen Fahrzeugs nach Anspruch 1, wobei
das Geschwindigkeitsänderung-Sonnenrad (31) einen Schaftbereich (39) aufweist, welcher an der Achse (1) mittels eines ersten Lagers (38) drehbar gehaltert ist, und
der Geschwindigkeitsverringerung-Träger (54) an dem Schaftbereich (39) mittels eines zweiten Lagers (58) drehbar gehaltert ist, welches um eine äußere Peripherie des ersten Lagers (38) bereitgestellt ist.

3. Nabeneinheit für einen elektrischen Hilfsantrieb eines von einem Menschen angetriebenen Fahrzeugs nach Anspruch 1 oder 2, wobei
eine Verbindung und eine Unterbrechung zwischen dem Geschwindigkeitsänderung-Sonnenrad (31) und der Achse (1) mittels einer Schaltkupplung (37) schaltbar sind,
eine erste Einwegkupplung (32) zwischen dem Geschwindigkeitsänderung-Ausgaberingzahnrad (33) und dem Nabengehäuse (2) bereitgestellt ist,
eine zweite Einwegkupplung (34) zwischen dem Geschwindigkeitsänderung-Träger (35) und dem Nabengehäuse (2) bereitgestellt ist, und
sowohl die erste als auch die zweite Einwegkupplung (32, 34) zwischen dem Motorgehäuse (41) und dem Nabengehäuse (2) an der Projektionsebene zu dem senkrecht zu der Achse (1) gelegenen Abschnitt bereitgestellt sind.

## Revendications

1. Unité de moyeu pour un véhicule à propulsion humaine assistée électriquement comprenant, dans un boîtier de moyeu (2) qui tourne autour d'un essieu (1) du véhicule :
une partie de mécanisme de changement de vitesse (3) transmettant une sortie de rotation d'une force de pédalage d'une pédale (P) au boîtier de moyeu (2) de sorte à être apte à changer une vitesse de sortie de rotation ;
un moteur électrique de propulsion (4) ; et
une partie de mécanisme de réduction de vitesse (5) décélérant une sortie de rotation du moteur électrique de propulsion (4) et transmettant la sortie de rotation au boîtier de moyeu (2), dans lequel la partie de mécanisme de changement de vitesse (3), la partie de mécanisme de réduction de vitesse (5) et le moteur électrique de propulsion (4) sont alignés dans une direction axiale de l'essieu (1),
dans laquelle la partie de mécanisme de changement de vitesse (3) est **caractérisée par** :
un engrenage solaire de changement de vitesse (31) à raccorder à l'essieu (1),
un engrenage annulaire de sortie de changement de vitesse (33) à raccorder au boîtier de moyeu (2),
un support de changement de vitesse (35) supporté en rotation sur l'essieu (1) et recevant la force de pédalage de la pédale (P) ; et
un pignon de changement de vitesse (36) supporté en rotation sur le support de changement de vitesse (35) et s'engrenant avec l'engrenage solaire de changement de vitesse (31) et l'engrenage annulaire de sortie de changement de vitesse (33),
la partie de mécanisme de réduction de vitesse (5) inclut :
un engrenage solaire de réduction de vitesse (51) supporté en rotation sur l'essieu (1) et recevant une sortie de rotation du moteur électrique de propulsion (4) ;
un engrenage annulaire de réduction de vitesse stationnaire (52) faisant saillie vers l'intérieur dans une direction radiale depuis un carter moteur (41) fixé de manière non rotative à l'essieu (1) ;
un engrenage annulaire de sortie de réduction de vitesse (53) faisant saillie du boîtier de moyeu (2) vers l'intérieur dans la direction radiale de l'engrenage annulaire de réduction de vitesse stationnaire (52) ;
un support de réduction de vitesse (54) supporté en rotation sur l'essieu (1) ; et
un pignon de réduction de vitesse (57) supporté en rotation sur le support de réduction de vitesse (54) et incluant coaxialement
un premier engrenage (55) s'engrenant avec l'engrenage solaire de réduction de vitesse (51) et l'engrenage annulaire de réduction de vitesse stationnaire (52), et
un second engrenage (56) s'engrenant avec l'engrenage annulaire de sortie de réduction de vitesse (53), et
sur un plan de projection sur une section perpendiculaire à l'essieu (1), des cercles primitifs de l'engrenage annulaire de réduction de vitesse stationnaire (52), l'engrenage annulaire de sortie de réduction de vitesse (53) et l'engrenage annulaire de sortie de changement de vitesse (33) sont agencés vers l'intérieur dans la direction radiale d'une périphérie extérieure d'un stator (42) du moteur électrique de propulsion (4).

2. Unité de moyeu pour un véhicule à propulsion humaine assistée électriquement selon la revendication 1, dans laquelle
l'engrenage solaire de changement de vitesse (31) présente une partie d'arbre (39) supportée en rotation sur l'essieu (1) par le biais d'un premier palier (38), et
le support de réduction de vitesse (54) est supporté en rotation sur la partie d'arbre (39) par le biais d'un second palier (58) prévu autour d'une périphérie extérieure du premier palier (38).

3. Unité de moyeu pour un véhicule à propulsion humaine assistée électriquement selon la revendication 1 ou 2, dans laquelle
la connexion et la déconnexion entre l'engrenage solaire de changement de vitesse (31) et l'essieu (1) sont commutables par un embrayage de commutation (37),
un premier embrayage une voie (32) est prévu entre l'engrenage annulaire de sortie de changement de vitesse (33) et le boîtier de moyeu (2),
un second embrayage une voie (34) est prévu entre le support de changement de vitesse (35) et le boîtier de moyeu (2), et
les deux premier et second embrayages une voie (32, 34) sont prévus entre le carter moteur (41) et le boîtier de moyeu (2) sur le plan de projection sur la section perpendiculaire à l'essieu (1).
